(19) Europäisches Patentamt
European Patent Office
Office européen des brevets

(11) EP 2 098 364 B1

(12) EUROPEAN PATENT SPECIFICATION

(45) Date of publication and mention
of the grant of the patent:
**14.08.2013 Bulletin 2013/33**

(51) Int Cl.:
*B32B 27/32* (2006.01)    *B32B 27/30* (2006.01)
*B32B 27/18* (2006.01)    *B65D 65/40* (2006.01)

(21) Application number: **07850092.3**

(22) Date of filing: **05.12.2007**

(86) International application number:
**PCT/JP2007/073450**

(87) International publication number:
**WO 2008/078522 (03.07.2008 Gazette 2008/27)**

(54) **MULTILAYERED CONTAINER EXCELLENT IN OXYGEN-BARRIER PROPERTY**

MEHRLAGIGER BEHÄLTER MIT HERVORRAGENDEN SAUERSTOFFSPERREIGENSCHAFTEN

CONTENANT MULTICOUCHE AYANT UNE EXCELLENTE PROPRIÉTÉ DE BARRIÈRE À L'OXYGÈNE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.12.2006 JP 2006352792**

(43) Date of publication of application:
**09.09.2009 Bulletin 2009/37**

(73) Proprietor: **Toyo Seikan Kaisha, Ltd.**
**Shinagawa-ku**
**Tokyo 141-8640 (JP)**

(72) Inventors:
• **ISHIHARA, Takayuki**
**Yokohama-shi**
**Kanagawa 240-0062 (JP)**
• **KIKUCHI, Atsushi**
**Yokohama-shi**
**Kanagawa 240-0062 (JP)**

• **GOTOU, Hiroaki**
**Yokohama-shi**
**Kanagawa 230-0001 (JP)**
• **TANAKA, Shinji**
**Yokohama-shi**
**Kanagawa 230-0001 (JP)**
• **MATSUMOTO, Kengo**
**Yokohama-shi**
**Kanagawa 230-0001 (JP)**

(74) Representative: **Chapman, Paul Gilmour et al**
**Marks & Clerk LLP**
**Aurora**
**120 Bothwell Street**
**Glasgow G2 7JS (GB)**

(56) References cited:
EP-A1- 1 464 482    EP-A1- 1 538 176
JP-A- 04 270 654    JP-A- 2003 334 906
JP-A- 2004 196 337    JP-A- 2004 268 977
JP-A- 2005 187 808

**Description**

Technical Field

The present invention relates to a multilayered container excellent in heat-resistance, the multilayered container being melt-molded and including an intermediate layer consisting of an oxygen-absorbing barrier resin composition.

Background Art

An oxygen barrier resin such as an ethylene-vinyl alcohol copolymer (EVOH) is used as a resin which is layered on a layer of a thermoplastic resin such as a polyolefin to form a multilayered container (refer to Patent Document 1).
A multilayered container including an intermediate layer of the oxygen barrier resin such as the ethylene-vinyl alcohol copolymer and having a shape of a bottle, a cup or the like, can be obtained by melt molding such as direct blow molding, injection molding, and in-line molding (a method in which a molten resin extruded from a T-die is directly molded). However, such a multilayered container has a problem of causing heat-shrinkage or the like due to its inferior heat-resistance.

Patent Document 1: Japanese Patent Application Publication No. 2005-187808
EP1464482 describes multi-layer materials which comprise a gas barrier layer sandwiched between polyolefin layers, formed by solid -phase molding.

Disclosure of the Invention

An object of the present invention is to provide a multilayered container excellent in heat-resistance, the multilayered container being melt-molded and including an intermediate layer consisting of an oxygen-absorbing barrier resin composition.
The present invention provides a multilayered container comprising: an inner layer including an olefin resin; an outer layer including an olefin resin; and an intermediate layer provided between the inner layer and the outer layer and consisting of an oxygen-absorbing barrier resin composition, wherein the oxygen-absorbing barrier resin composition includes a resin obtained by blending an oxidizable polymer having unsatured ethylenic bonds and an oxidation catalyst with the base resin. The multilayered container is melt-molded, a thermal analysis of a body portion of the container shows that an amount of heat released during isothermal crystallization after the temperature is raised from 30°C to 130°C at 100 °C/min is 0.5 J/g or more, and a thermal analysis of a body portion of the container shows that time taken from completion of temperature reduction from 200°C to 130° at 100°C/min to a peak top in an isothermal crystallization profile is shorter than that of a multilayered container in which a base resin (oxygen barrier resin) of an oxygen-absorbing barrier resin is solely used as an intermediate layer.
The multilayered container of the present invention makes it possible to obtain a multilayered container excellent in heat-resistance and improved in heat shrinkage properties, the multilayered container being melt-molded and including an intermediate layer consisting of an oxygen-absorbing barrier resin composition, wherein the oxygen-absorbing barrier resin composition includes a resin obtained by blending an oxidizable polymer having unsatured ethylenic bonds and an oxidation catalyst with the base resin.
A multilayered container of the present invention includes an inner layer including an olefin resin, an outer layer including an olefin resin and an intermediate layer consisting of an oxygen-absorbing barrier resin composition, wherein the oxygen-absorbing barrier resin composition includes a resin obtained by blending an oxidizable polymer having unsatured ethylenic bonds and an oxidation catalyst with the base resin.
Examples of the olefin resins include: polyethylenes (PE) such as low density polyethylene (LDPE), medium density polyethylene (MDPE), high density polyethylene (HDPE), linear low density polyethylene (LLDPE), and linear very low density polyethylene (LVLDPE); polypropylene(PP); an ethylene-propylene copolymer; polybutene-1; an ethylene-butene-1 copolymer; a propylene-butene-1 copolymer; an ethylene-propylene-butene-1 copolymer; an ethylene-vinyl acetate copolymer; an ion-crosslinked olefin copolymer (ionomer) ; and a blended material thereof.
Examples of the gas barrier resin include an ethylene-vinyl alcohol copolymer, a polyamide resin, and a polyester resin. These resins may be used alone or in a combination of two or more.
In the present invention, the ethylene-vinyl alcohol copolymer is desirably used as a resin which is particularly excellent in barrier properties against oxygen and flavor components. As the ethylene-vinyl alcohol copolymer, any publicly-known ethylene-vinyl alcohol copolymer can be used. For example, a saponified copolymer obtained by saponifying an ethylene-vinyl acetate copolymer having an ethylene content of 20 to 60 mol%, particularly 25 to 50 mol%, so that the saponification degree can be 96 mol% or more, particularly 99 mol% or more can be used.
This ethylene-vinyl alcohol saponified copolymer needs to have a molecular weight enough to allow the saponified copolymer to be formed into a film. Generally, the ethylene-vinyl alcohol saponified copolymer has a viscosity of desirably 0.01 dL/g or more, particularly desirably 0.05 dL/g or more, the viscosity being determined in a mixture solvent with a weight ratio of 85:15 of phenol to water, at 30°C.

Examples of the polyamide resin include: (a) an aliphatic, alicyclic or semi-aromatic polyamide derived from a dicarboxylic acid component and a diamine component; (b) a polyamide derived from an aminocarboxylic acid or a lactam of an aminocarboxylic acid; a copolyamide thereof; and a blended material thereof.

Examples of the dicarboxylic acid component include: an aliphatic dicarboxylic acid having 4 to 15 carbon atoms, such as succinic acid, adipic acid, sebacic acid, decanedicarboxylic acid, undecanedicarboxylic acid, or dodecanedicarboxylic acid; and an aromatic dicarboxylic acid such as terephthalic acid or isophthalic acid.

Meanwhile, examples of the diamine component include: a linear- or branched-chain alkylenediamine having 4 to 25 carbon atoms, particularly 6 to 18 carbon atoms, such as 1, 6-diaminohexane, 1,8-diaminooctane, 1,10-diaminodecane, or 1,12-diaminododecane; an alicyclic diamine such as a bis(aminomethyl)cyclohexane, bis(4-aminocyclohexyl)methane, or 4,4'-diamino-3,3'-dimethyldicyclohexylmethane, or particularly bis(4-aminocyclohexyl)methane, 1,3-bis(aminocyclohexyl)methane, or 1,3-bis(aminomethyl)cyclohexane; and an aromatic-aliphatic diamine such as m-xylylenediamine and/or p-xylylenediamine.

Examples of the aminocarboxylic acid component include: an aliphatic aminocarboxylic acid such as, $\omega$-aminocaproic acid, $\omega$-aminooctanoic acid, $\omega$-aminoundecanoic acid, or $\omega$-aminododecanoic acid; and an aroma-aliphatic aminocarboxylic acid such as para-aminomethylbenzoic acid, or para-aminophenylacetic acid.

Of these polyamides, polyamides containing xylylene groups are preferable, and specific examples thereof include: a homopolymer such as poly-meta-xylylene adipamide, poly-meta-xylylene sebacamide, poly-meta-xylylene suberamide, poly-para-xylylene pimelamide, or poly-meta-xylylene azelamide; a copolymer such as a meta-xylylene/para-xylylene adipamide copolymer, a meta-xylylene/para-xylylene pimelamide copolymer, a meta-xylylene/para-xylylene sebacamide copolymer or a meta-xylylene/para-xylylene azelamide copolymer; a copolymer obtained by copolymerizing components of these homopolymers or these copolymers with an aliphatic diamine such as hexamethylenediamine; an alicyclic diamine such as piperazine; an aromatic diamine such as para-bis(2aminoethyl)benzene, an aromatic dicarboxylic acid such as terephthalic acid, a lactam such as $\varepsilon$-caprolactam, an $\omega$-aminocarboxylic acid such as 7-aminoheptanoic acid, an aromatic aminocarboxylic acid such as para-aminomethyl benzoic acid; or the like. Particularly, a polyamide obtained from a diamine component mainly containing m-xylylenediamine and/or p-xylylenediamine and an aliphatic dicarboxylic acid and/or an aromatic dicarboxylic acid can be suitably used.

These polyamides containing xylylene groups are superior in gas barrier properties to other polyamide resins, and thus preferable for achieving the object of the present invention.

As for the polyamide in the present invention, a polyamide resin having a terminal amino group concentration of 40 eq/$10^6$g or more, particularly having a terminal amino group concentration exceeding 50 eq/$10^6$g is preferable from the viewpoint of suppressing the oxidative degradation of the polyamide resin.

Oxidative degradation, i. e., oxygen absorption, of a polyamide resin, and the terminal amino group concentration of the polyamide resin have a close relationship to each other. Specifically, when the terminal amino group concentration of a polyamide resin is within the above-described range which is relatively high, the oxygen absorption rate is reduced to a value of almost zero or close to zero. In contrast, if the terminal amino group concentration of a polyamide resin falls below the above-described range, the oxygen absorption rate of the polyamide resin tends to increase.

These polyamides also need to have molecular weights enough to allow the polyamides to be formed into films, and the relative viscosity ($\eta$rel) thereof determined at a concentration of 1.0g/dl in sulfuric acid and at a temperature of 30°C is desirably 1.1 or more, particularly desirably 1.5 or more.

Examples of the polyester resin include a so-called gas barrier polyester, which is a thermoplastic polyester derived from an aromatic dicarboxylic acid such as terephthalic acid and isophthalic acid and a diol such as ethylene glycol. The gas barrier polyester contains, in its polymer chain, a terephthalic acid component (T) and an isophthalic acid component (I) in a molar ratio of:

$$T:I = 95:5 \text{ to } 5:95,$$

particularly, 75:25 to 25:75, and
an ethylene glycol component (E) and a bis (2-hydroxyethoxy)benzene component (BHEB) in a molar ratio of:

$$E:BHEB = 99.999:0.001 \text{ to } 2.0:98.0,$$

particularly, 99.95:0.05 to 40:60.

As the BHEB, 1,3-bis(2-hydroxyethoxy)benzene is preferable.

This polyester needs to have a molecular weight at least enough to allow the polyester to be formed into a film, and generally the polyester has an intrinsic viscosity [η] of desirably 0.3 to 2.8 dl/g, particularly desirably 0.4 to 1.8 dl/g, the intrinsic viscosity being determined in a mixture solvent with a weight ratio of 60:40 of phenol to tetrachloroethane at a temperature of 30°C.

A polyester resin mainly made of polyglycol acid, or a polyester resin obtained by blending this polyester resin with a polyester resin derived from the above-described aromatic dicarboxylic acid and the above-described diol also can be used.

The oxygen-absorbing barrier resin composition includes an oxidizable polymer. Here, the oxidizable polymer represents a polymer which exhibits an oxygen-absorbing function by being oxidized.

The oxidizable polymer is an oxidizable polymer having unsaturated ethylenic bonds, and the oxidizable polymer is, for example, derived by using a polyene as a monomer. A homopolymer of a polyene appropriate examples of which include conjugated dienes such as butadiene and isoprene; or a random or block copolymer of a combination of two kinds or more of the above-described polyenes or of a combination of the above-described polyene with a monomer other than the polyene, or the like can be used as the oxidizable polymer. Among the polymers derived from polyenes, polybutadiene, polyisoprene, natural rubber, nitrile-butadiene rubber, styrene-butadiene rubber, chloroprene rubber, ethylene-propylene-diene rubber and the like are suitable, however, as a matter of course, the oxidizable polymer is not limited thereto.

In addition, the oxidizable polymer having unsaturated ethylenic bonds preferably has a functional group. Examples of the functional group include a carboxylic acid group, a carboxylic anhydride group, a carboxylic acid ester group, a carboxylic acid amide group, an epoxy group, a hydroxy group, an amino group, a carbonyl group and the like. The carboxylic acid group and the carboxylic anhydride group are particularly preferable from the viewpoint of compatibility and the like. These functional groups may be located in a side chain of the resin or a terminal of the resin.

Examples of a monomer used to introduce these functional groups include ethylenic unsaturated monomers each having the corresponding one of the above-described functional groups.

As a monomer used to introduce a carboxylic acid group or a carboxylic anhydride group into an oxidizable polymer having unsaturated ethylenic bonds, an unsaturated carboxylic acid or a derivative thereof is desirably used, and specific examples thereof include: an α,β-unsaturated carboxylic acid such as acrylic acid, methacrylic acid, maleic acid, fumaric acid, itaconic acid, citraconic acid, or tetrahydrophthalic acid; an unsaturated carboxylic acid such as bicyclo [2,2,1]hepto-2-ene-5,6-dicarboxylic acid; an α,β-unsaturated carboxylic acid anhydride such as maleic anhydride, itaconic anhydride, citraconic anhydride, or tetrahydrophthalic anhydride; and an unsaturated carboxylic acid anhydride such as bicyclo[2,2,1]hepto-2-ene-5,6-dicarboxylic acid anhydride.

The acid modification of the oxidizable polymer having unsaturated ethylenic bonds is carried out by using the oxidizable polymer having unsaturated ethylenic bonds as the base polymer, and by graft-copolymerization of an unsaturated carboxylic acid or a derivative thereof to the base polymer by use of a means known per se. Alternatively, the acid modification of the oxidizable polymer having unsaturated ethylenic bonds can be produced by random-copolymerization of the above-mentioned oxidizable polymer having unsaturated ethylenic bonds and an unsaturated carboxylic acid or a derivative thereof.

An oxidizable polymer having unsaturated ethylenic bonds and having a carboxylic acid group or a carboxylic anhydride group particularly suitable from the viewpoint of dispersibility to the oxygen barrier resin is preferably a liquid resin containing a carboxylic acid or a derivative thereof in an amount to give an acid number of 5 KOH mg/g or more.

When the content of the unsaturated carboxylic acid or the derivative thereof is within the above-described range, the oxidizable polymer having unsaturated ethylenic bonds is favorably dispersed in the oxygen barrier resin, and the oxygen absorption is also performed smoothly.

When the oxidizable polymer having unsaturated ethylenic bonds is blended into the oxygen barrier resin, 1 g of the oxidizable polymer having unsaturated ethylenic bonds is preferably capable of absorbing $2 \times 10^{-3}$ mol or more, particularly $4 \times 10^{-3}$ mol or more of oxygen in the presence of a transition metal catalyst at a normal temperature. In other words, when the oxygen-absorbing capability is the above-described value or more, it is unnecessary to blend a large amount of the oxidizable polymer having unsaturated ethylenic bonds into the oxygen barrier resin in order to cause favorable oxygen barrier properties to be exhibited. Accordingly, this results in no reduction in processability and moldability of the resin composition into which the oxidizable polymer having unsaturated ethylenic bonds is blended.

The carbon-carbon double bond in the oxidizable polymer having unsaturated ethylenic bonds used in the present invention is not particularly limited. The carbon-carbon double bond may be located in the main chain in a form of a vinylene group, or may be located in a side chain in a form of a vinyl group. In short, the carbon-carbon double bond only needs to be oxidizable.

The oxidizable polymer having unsaturated ethylenic bonds is preferably contained in the range of 1 to 30 % by weight, particularly 3 to 20% by weight relative to the oxygen-absorbing barrier resin composition. When the blended amount of the oxidizable polymer having unsaturated ethylenic bonds is within the above-described range, the resulting oxygen-absorbing layer has a sufficient oxygen-absorbing capability, and the moldability of the resin composition can be maintained.

The oxygen-absorbing barrier resin composition includes an oxidation catalyst.

Preferable examples of the oxidation catalyst include transition metal catalysts containing a group VIII metal component of the periodic table, such as iron, cobalt and nickel. In addition, other examples include transition metal catalysts containing: a group I metal component such as copper and silver; a group IV metal component such as tin, titanium and zirconium; and a group V metal component such as vanadium, a group VI metal component such as chromium, and a group VII metal component such as manganese. Of these metal components, the cobalt component has a high oxygen absorption rate, and thus is particularly suitable for achieving the object of the present invention.

The transition metal catalyst is used generally in a form of a low valent inorganic acid salt, a low valent organic acid salt or a low valent complex salt of the above-described transition metal.

Examples of the inorganic acid salt include: halides such as a chloride; sulfur oxyacid salts such as a sulfate; nitrogen oxyacid salts such as a nitrate; phosphorus oxyacid salts such as a phosphate; a silicate; and the like.

Meanwhile, examples of the organic acid salt include a carboxylate, a sulfonate, and a phosphonate. A carboxylate is suitable for achieving the object of the present invention, and specific examples thereof include transition metal salts of acetic acid, propionic acid, propionic acid, butanoic acid, isobutanoic acid, pentanoic acid, isopentanoic acid, hexanoic acid, heptanoic acid, isoheptanoic acid, octanoic acid, 2-ethylhexanoic acid, nonanoic acid, 3,5,5-trimethylhexanoic acid, decanoic acid, neodecanoic acid, undecanoic acid, lauric acid, myristic acid, palmitic acid, margaric acid, stearic acid, arachic acid, linderic acid, tsuzuic acid, petroselinic acid, oleic acid, linoleic acid, linolenic acid, arachidonic acid, formic acid, oxalic acid, sulfamic acid, naphthenic acid and the like.

On the other hand, a complex with β-diketone or β-keto acid ester is used as the complex of the transition metal, and examples of the β-diketone and the β-keto acid ester usable herein include acetyl acetone, ethyl acetoacetate, 1,3-cyclohexadione, methylene-bis-1,3-cyclohexadione, 2-benzyl-1,3-cyclohexadione, acetyl tetralone, palmitoyl tetralone, stearoyl tetralone, benzoyl tetralone, 2-acetyl cyclohexanone, 2-benzoyl cyclohexanone, 2-acetyl-1,3-cyclohexanedione, benzoyl-p-chlorobenzoylmethane, bis(4-methylbenzoyl)methane, bis(2-hydroxybenzoyl)methane, benzoylacetone, tri-benzoylmethane, diacetylbenzoylmethane, stearoylbenzoylmethane, palmitoylbenzoylmethane, lauroylbenzoylmethane, dibenzoylmethane, bis(4-chlorobenzoyl)methane, bis(methylene-3,4-dioxybenzoyl)methane, benzoylacetylphenylmethane, stearoyl(4-methoxybenzoyl)methane, butanoylacetone, distearoylmethane, acetylacetone, stearoylacetone, bis(cyclohexanoyl)methane, dipivaloylmethane and the like.

Generally, the content of the above-mentioned oxidizable polymer is 1 to 30% by weight, preferably 3 to 20% by weight, relative to the total weight of the oxygen-absorbing barrier resin composition.

Generally, the content of the oxidation catalyst is 100 to 1000 ppm, preferably 200 to 500 ppm, in terms of the amount of metal, relative to the total weight of the oxygen-absorbing barrier resin composition.

In the multilayered container of the present invention, the oxygen-absorbing barrier resin composition is used as the intermediate layer, which results in acceleration of crystallization of the olefin layers which are the inner and outer layers. Accordingly, the heat-resistance of the multilayered container can be increased. The oxygen-absorbing barrier resin composition used in the intermediate layer may be a blendedmaterial of the base resin and the oxidizable polymer having unsaturated ethylenic bonds. Alternatively, the oxygen-absorbing barrier resin composition used in the intermediate layer may be the base resin and the oxidizable polymer having unsaturated ethylenic bonds which are bonded to each other. Moreover, a third component such as a nucleating agent for accelerating the crystallization may be blended into the oxygen-absorbing barrier resin composition.

The multilayered container of the present invention is formed by melt molding, and is such that a thermal analysis of the body portion of the container shows that the amount of heat released during isothermal crystallization after the temperature is raised from 30°C to 130°C at 100°C/min is 0.5J/g or more. When the amount of heat released is in such a range, strain in molding is relaxed. Accordingly, a multilayered container being excellent in heat-resistance and having improved heat shrinkage resistance can be obtained. The above-described amount of heat released is preferably 0.5 to 2.0 J/g, more preferably 0.5 to 1.6 J/g.

The multilayered container of the present invention is such that a thermal analysis of a body portion of the container shows that the time taken from completion of temperature reduction from 200°C to 130° at 100°C/min to a peak top in an isothermal crystallization profile is shorter than that of a multilayered container in which a base resin (oxygen barrier resin) of an oxygen-absorbing barrier resin is solely used as an intermediate layer. When the above-described time is made shorter than that of a multilayered container in which a base resin is solely used, a high crystallization degree can be achieved in a short period. Accordingly, a multilayered container being excellent in heat-resistance and having improved heat shrinkage resistance can be obtained. The above-described time is preferably 0.0 to 3.0 minutes, more preferably 0.0 to 1.0 minutes.

The multilayered container of the present invention may include an adhesive resin interposed between any adjacent resin layers, if necessary.

Examples of such an adhesive resin include a polymer including a carboxylic acid, a carboxylic anhydride or a carboxylic acid in the main chain or side chains thereof at a concentration of 1 to 700 milliequivalent (meq) per 100 g of resin, preferably 10 to 500 meq per 100 g of resin.

Examples of the adhesive resin include an ethylene-acrylic acid copolymer, an ion-crosslinked olefin copolymer, maleic anhydride grafted polyethylene, maleic anhydride grafted polypropylene, acrylic acid grafted polyolefin,an ethylene-vinyl acetate copolymer, copolymerized polyester, copolymerized polyamide and the like, and the adhesive resin may be a combination of two or more of these resins.

These adhesive resins are useful for lamination by co-extrusion, sandwich lamination or the like. A thermosetting adhesive resin of an isocyanate type or epoxy type can also be used.

A layer structure in which the oxygen-absorbing barrier resin composition of the present invention is used can be selected appropriately, depending on the use mode and required function. In particular, a structure having at least one oxygen barrier layer is preferable because the life time of the oxygen absorption layer can be improved.

In a laminated body in which the oxygen-absorbing barrier resin composition of the present invention is used, a deodorant or an adsorbent for oxidation by-products is preferably blended into the oxygen absorption layer or any one of the other layers, particularly a layer inside the oxygen absorption layer, in order to trap by-products generated in oxygen absorption.

Examples of the deodorant and the adsorbent include ones known per se. Specifically, the examples include naturally occurring zeolite, synthetic zeolite, silica gel, active carbon, impregnated active carbon, activated clay, activated aluminum oxide, clay, diatomaceous earth, kaolin, talc, bentonite, sepiolite, attapulgite, magnesium oxide, iron oxide, aluminum hydroxide, magnesium hydroxide, iron hydroxide, magnesium silicate, aluminum silicate, synthetic hydrotalcite and amine-supporting porous silica. Of these, the amine-supporting porous silica is preferable from the viewpoint of reactivity with aldehydes, which are oxidation by-products. A so called high silica zeolite, which has a high silica/alumina ratio, is preferable from the viewpoint of exhibiting excellent properties for absorbing various oxidation by-products and being transparent.

The silica/alumina ratio (molar ratio) of the high silica zeolite is preferably 80 ormore, more preferably 90 or more, further preferably 100 to 700. In certain highly humid conditions, a zeolite with a low silica/alumina ratio has properties in which absorbability of oxidation by-products is deteriorated. In contrast, in such highly humid conditions, a zeolite with the high silica/alumina ratio has properties that packaging properties thereof for oxidation by-products improve. Accordingly, the zeolite with such a high silica/alumina ratio is particularly effective when used in a package for packaging contents containing water. The exchanged cations of the high silica zeolite need to be one kind of, or a combination of two or more kinds of: alkali metal ions such as sodium, lithium and potassium ions; and alkaline earth metal ions such as calcium and magnesium ions. In this case, silica zeolite containing at least sodium cations as the exchanged cations is preferable. A particularly preferable example of silica zeolite is one in which substantially all exchanged cations are sodium ions.

A packaging container which employs the multilayered structure of the present invention is useful as a container capable of preventing flavor deterioration of the contents due to oxygen.

Examples of contents which can be packaged include contents which easily degrade in the presence of oxygen.

Specifically, the examples include: beveragessuch as beer, wine, fruit juice, carbonated soft drink, oolong tea and green tea; foods such as fruit, nuts, vegetables, meat products, infant food, coffee, jam, mayonnaise, ketchup, edible oil, dressing, various kinds of sauce, foods boiled down in soy or the like, and dairy products; other contents such as medicines, cosmetics and gasoline; and the like. However, contents which can be packaged are not limited thereto.

[Examples]

The present invention will be further described on the basis of Examples bellow; however, the present invention it not limited to these Examples.

1. Determination Methods

(1) Amount of Heat Released during Isothermal Crystallization after Temperature Raise

A part was cut out from the body portion of a prepared multilayered container. The part was heated from 30°C to 130°C at a rate of 100°C/min and held for 30 minutes, by using a DSC measurement differential scanning calorimeter (DSC6220: manufactured by Seiko Instruments Inc.) to determine the amount of heat released during isothermal crystallization.

(2) Time Taken from Completion of Temperature Reduction to Peak Top in Isothermal Crystallization Profile

A part was cut out from the body portion of a multilayered container formed by using the base resin solely as the intermediate layer. The part was heated from 30°C to 230°C at a rate of 100°C/min , held for 5 minutes, cooled to 130°C at a rate of 100°C/min, and held for 30 minutes, by using a DSC measurement differential scanning calorimeter (DSC6220: manufactured by Seiko Instruments Inc.). Thus, isothermal crystallization was performed.

The time from the time point at which isothermal crystallization at 130°C was started to the time point of the peak top where the amount of heat released was maximum was found to be 4.43 minutes in the obtained profile, which time is used as the standard value (Comparative Example 1).

2. Evaluation [Heat-Resistance]

The weight (cc) (V1) of a prepared multilayered container filled with distilled water at 25°C was measured. Then, the container was emptied. Thereafter, the container was filled with distilled water boiling at 100°C . After completion of the shrinkage of the multilayered container, the weight (cc) (V2) thereof was measured. Then, the change in filled amount (V1-V2)/V1 due to the above-described heat shrinkage was calculated as the weight change ratio.

(Example 1)

Base resin (oxygen barrier resin) pellets made of an ethylene-vinyl alcohol copolymer resin (copolymerized with 32 mol% of ethylene) (EP-F171B: KURARAY CO., LTD.) was mixed with a transition metal catalyst of cobalt neodecanoate (cobalt content: 14 wt%) (DICANATE5000: Dainippon Ink and Chemicals, Incorporated) by using a tumbler. Accordingly, 350 ppm of cobalt neodecanoate in terms of cobalt content was evenly attached onto the surface of the above-described base resin pellets.

Next, a twin screw extruder (TEM-35B: TOSHIBA MACHINE CO., LTD) equipped with a strand die at the outlet portion thereof was used to prepare oxygen-absorbing barrier resin composition pellets. The twin screw extruder was operated at a screw revolution speed of 100 rpm and was evacuated through a low vacuum vent. In the extruder, 50 parts by weight of maleic anhydride-modified polybutadiene having an acidnumber of 40 g KOH/g (M-2000-20: Nippon Petrochemicals Co., Ltd.) was added dropwise by using a liquid feeder to 950 parts by weight of the base resin with the cobalt attached thereto, and then strands were formed at a mold temperature of 200°C. Thus, oxygen-absorbing barrier resin composition pellets were prepared.

Then, a polypropylene resin (EC9J: Japan Polypropylene Corporation); an adhesive resin (ADMER QF551, Mitsui Chemicals, Inc.); and the oxygen-absorbing barrier resin composition pellets were put into a T-die extruder to prepare a sheet formed of five layers using three types of resins.

The structure and thickness of the layers were as follows: polypropylene layer (557 $\mu$m)/adhesive resin layer (24 $\mu$m)/oxygen-absorbing barrier resin composition layer (38 $\mu$m)/adhesive resin layer (24 $\mu$m)/polypropylene layer (557 $\mu$m). The total thickness of the sheet is 1200 $\mu$m.

A 30 cm-square piece was cut out of the multilayered sheet, and heated with a far-infrared heater to 180°C which is a temperature not less than the melting point (160°C) of polypropylene forming inner and outer layers of the sheet. Then, the sheet was melt-molded by using a plug assisted vacuum-pressure forming machine to form a multilayered container with a drawing ratio H/D of 0.8 and an internal volume in a fully filled state of 180 ml.

The multilayered container thus formed was subjected to determination of the amount of heat released during isothermal crystallization after the temperature is raised and the time taken from the completion of temperature reduction to the peak top in isothermal crystallization profile, and heat-resistance of the multilayered container was evaluated.

(Comparative Example 1)

A multilayered container was prepared in the same manner as that of Example 1, except that the intermediate layer was made of only the base resin. Then, the multilayered container was subjected to the above-described determination and evaluation.

(Comparative Example 2)

The multilayered sheet obtained in Example 1 was heated to 148°C which is a temperature lower than the melting point (160°C) of polypropylene forming the inner and outer layers, then a solid-phase was formed by using a plug-assisted vacuum-pressure molding machine to form a multilayered container with a drawing ratio H/D of 1.6 and an internal volume in a fully filled state of 200 ml. Then, the multilayered container was subjected to the above-described determination and evaluation.

(Comparative Example 3)

A multilayered container was solid-phase formed in the same manner as that of Comparative Example 2, except that the intermediate layer was made of only the base resin and the heating temperature was set to 138°C. Then the multilayered container was subjected to the above-described determination and evaluation.

Table 1 shows the determination results and the evaluation results. As is clear from Table 1, the multilayered container of the present invention experiences less heat shrinkage and is excellent in heat-resistance, although melt-molded. In particular, a melt-molded multilayered container is generally used in applications which involve heat treatments such as sterilization. Therefore, the multilayered container of the present invention turns out to be suitable for such applications.

[Table 1]

EP 2 098 364 B1

Table 1 Melt-molding

| | Determined portion | Layer structure | Molding temperature (°C) | Drawing ratio (H/D) | Internal volume in fully filled state (ml) | Heat released during isothermal crystallization after temperature raise (J/g) | Time taken from completion of temperature reduction to peak top in iso crystallization profile (min) | Evaluation (Heat resistance) Weight change ratio (%) |
|---|---|---|---|---|---|---|---|---|
| Example 1 | Body portion | PP/adhesive/oxygen absorbing material/adhesive/PP | 180°C | 0.8 | 180 | 0.52 | 0.89 | 0.6 |
| Comparative Example 1 | Body portion | PP/adhesive/base resin/adhesive/PP | 180°C | 0.8 | 180 | 1.59 | 4.43 | 2.0 |
| Comparative Example 2 | Body portion | PP/adhesive/oxygen absorbing material/adhesive/PP | 148°C | 1.6 | 200 | 0.13 | 3.34 | 7.1 |
| Comparative Example 3 | Body portion | PP/adhesive/base resin/adhesive/PP | 138°C | 1.6 | 200 | 0.03 | 4.53 | 9.7 |

9

# EP 2 098 364 B1

**Claims**

1. A multilayered container comprising:

    an inner layer including an olefin resin;
    an outer layer including an olefin resin; and
    an intermediate layer provided between the inner layer and the outer layer and consisting of an oxygen-absorbing barrier resin composition, wherein the oxygen-absorbing barrier resin composition includes a resin obtained by blending an oxidizable polymer having unsaturated ethylenic bonds and an oxidation catalyst with the base resin, wherein
    the multilayered container is melt-molded,
    a thermal analysis of a body portion of the container shows that an amount of heat released during isothermal crystallization after the temperature is raised from 30°C to 130°C at 100°C/min is 0.5 J/g or more, and that time taken from completion of temperature reduction from 200°C to 130°C at 100°C/min to a peak top in an isothermal crystallization profile is shorter than that of a multilayered container in which a base resin (oxygen barrier resin) of an oxygen-absorbing barrier resin is solely used as an intermediate layer.

2. The multilayered container according to claim 1, wherein in the oxygen-absorbing barrier resin composition, the base resin and the oxidizable polymer having unsaturated ethylenic bonds are bonded to each other.

3. The multilayered container according to any one of claims 1 to 2, wherein the base resin is an ethylene-vinyl alcohol copolymer resin.

**Patentansprüche**

1. Mehrschichtiger Behälter umfassend:

    eine innere Schicht umfassend ein Olefinharz,
    eine äußere Schicht umfassend ein Olefinharz, und
    eine Zwischenschicht vorgesehen zwischen der inneren Schicht und der äußeren Schicht und bestehend aus einer Sauerstoff absorbierenden Barriere-Harz-Zusammensetzung, wobei die Sauerstoff absorbierende Barriere-Harz-Zusammensetzung ein durch Mischen eines oxydierbaren Polymers, das ungesättigte ethylenische Bindungen hat, und eines Oxidationskatalysators mit dem Basisharz erhaltenes Harz enthält, wobei
    der mehrschichtige Behälter schmelzgeformt ist,
    eine thermische Analyse eines Teils aus dem Körper des Behälters zeigt, dass eine während isothermer Kristallisation nach Erhöhen der Temperatur von 30 °C auf 130 °C bei 100 °C/min freigesetzte Wärmemenge 0,5 J/g oder höher ist, und die vom Abschluss der Temperaturverminderung von 200 °C auf 130 °C bei 100 °C/min bis zu einer Peakspitze in einem isothermen Kristallisationsprofil eingenommene Zeit kürzer ist als die eines mehrschichtigen Behälters, in welchem ein Basisharz (Sauerstoffbarriere-Harz) eines Sauerstoff absorbierenden Barriereharzes allein als Zwischenschicht benutzt wird.

2. Mehrschichtiger Behälter gemäß Anspruch 1, wobei in der Sauerstoff absorbierenden Barriere-Harz-Zusammensetzung das Basisharz und das oxidierbare Polymer, das ungesättigte ethylenische Bindungen hat, miteinander verbunden kind.

3. Mehrschichtiger Behälter nach einem der Ansprüche 1 und 2, wobei das Basisharz ein Ethylen-Vinyialkohol-Copolymerharz ist.

**Revendications**

1. Récipient multicouche comportant :

    une couche intérieure incluant une résine oléfine,
    une couche extérieure incluant une résine oléfine, et
    une couche intermédiaire prévue entre la couche intérieure et la couche extérieure et constituée d'une composition de résine à effet de barrière absorbant l'oxygène, dans lequel la composition de résine à effet de barrière absorbant l'oxygène inclut une résine obtenue en mélangeant un polymère oxydable ayant des liaisons éthyléniques insaturées et un catalyseur d'oxydation avec la résine de base,

le récipient multicouche étant moulé à l'état fondu,

une analyse thermique d'uns partie de corps du récipient montrant qu'une quantité de chaleur libérée pendant la cristallisation isotherme après la température soit de 30°C jusqu'à 130°C à 100°C/minute est de 0,5 J/g ou une valeur supérieure, et que le temps pris à partir de la fin de la réduction de température de 200°C à 130°C à 100°C/minute jusqu'à un sommet de pic dans un profil de cristallisation isotherme est plus court que celui d'un récipient multicouche dans lequel une résine de base (résine à effet de barrière contre l'oxygène) d'une résine à effet de barrière absorbant l'oxygène est uniquement utilisée en tant que couche intermédiaire.

2. Récipient multicouche selon la revendication 1, dans lequel la composition de résine à effet de barrière absorbant l'oxygène, la résine de base et le polymère oxydable ayant des liaisons éthyléniques insaturées sont liées ensemble.

3. Récipient multicouche selon l'une quelconque des revendications 1 à 2, dans lequel la résine de base est une résine copolymère éthylène-alcool vinylique.

**EP 2 098 364 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005187808 A
- EP 1464482 A